# EUROPEAN PATENT SPECIFICATION

(11) **EP 0 371 717 B1**
(45) Date of publication and mention of the grant of the patent: **25.01.1995**
(21) Application number: 89312259.8
(22) Date of filing: 27.11.1989
(51) Int. Cl.: H04N 5/93, H04N 5/92

(54) **Apparatus for reproducing digital audio and video data**
Vorrichtung zum Wiedergeben von digitalen Audio- und Videodaten
Dispositif de reproduction de données numériques audio et vidéo

(30) Priority: 29.11.1988 JP 301543/88
(43) Date of publication of application: 06.06.1990
(73) Proprietor: SONY CORPORATION, Tokyo 141 (JP)
(72) Inventor: Murakami, Yoshihiro, Shinagawa-ku Tokyo (JP)
(74) Representative: Ayers, Martyn Lewis Stanley

(56) References cited:
- EP-A- 0 180 445
- GB-A- 2 092 814
- US-A- 4 717 972
- US-A- 4 751 590
- FERNSEH & KINOTECHNIK, vol. 38, no. 7, July 1984, pages 281 - 286; J. HEITMANN: " Digitale Videoaufzeichnung Grundlagen Standardisierung. Entwicklung"
- S.M.P.T.B. JOURNAL, vol. 97, no. 3, March 1988, pages 182-193, White Plains, NY, US; R. BRUSH: "Design considerations for the D-2 NTSC composite DVTR"
- WIRELESS WORLD, no. 1850, May 1984, pages 55-58, Sheepen Place, Olchester, GB;J.R. WATKINSON et al.: "Variable-speed video playback"

## Description

This invention relates to an apparatus for variable-speed reproduction of audio and video data by scanning inclined recording tracks by a dynamic tracking head. It is applied for example to a digital video tape recorder of so-called D1 or D2 format in which dual digital audio data are recorded on the recording tracks. Such formats are disclosed in GB-A- 2 092 814 and "Fernseh- und Kinotechnik, Vol. 38, no. 7, July 1984, pages 281-286." The latter mentions the provision of a crossfading function of the audio reproducing channels during editing.

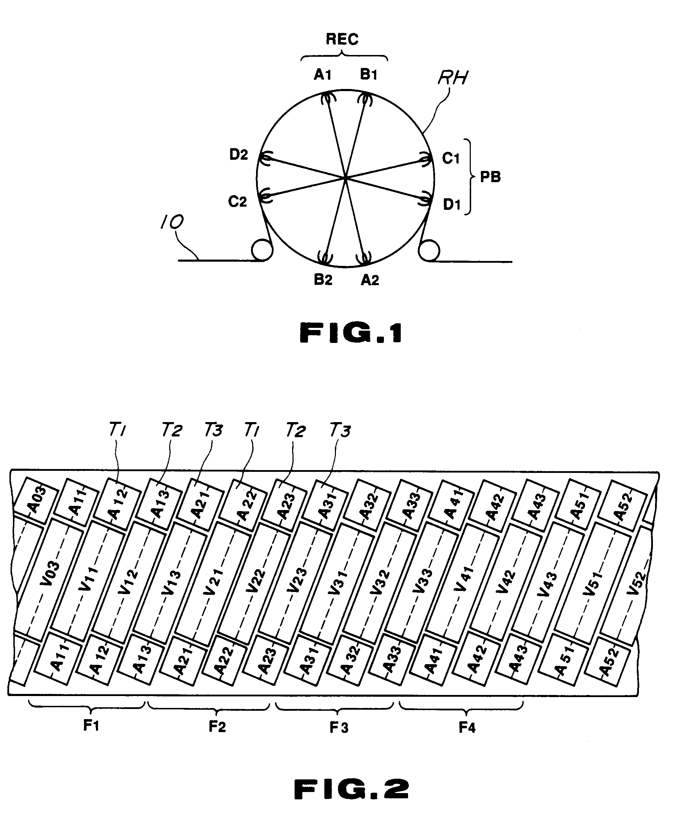

With a so-called D1 or D2 format digital video tape recorder, digitized video and audio data are sequentially recorded on recording tracks T of the magnetic tape 10, inclined with respect to the longitudinal direction of the magnetic tape 10, as shown in Figure 2 of the accompanying drawing, by a rotary magnetic head apparatus RH shown for example in Figure 1.

The rotary magnetic head device RH shown in Figure 1 is provided with two pairs of recording heads A₁, B₁, A₂, B₂, arranged at an angular interval of 180° to each other, and two pairs of reproducing heads C₁, D₁, C₂, D₂ arranged at an angular interval of 180° to each other and orthogonally to the recording heads A₁, B₁, A₂, B₂. The recording head pairs A₁, B₁ and A₂, B₂ and the reproducing head pairs C₁, D₁ and C₂, D₂ are arranged with a height difference corresponding to one track width. In the case of the NTSC system, for example, the rotary magnetic head device RH is driven at a rotational speed of 1.5 revolutions per field to record one-field video data on three sets of tracks T₁ to T₃ on the magnetic tape 10, as shown in Figure 1.

Each inclined recording track on the magnetic tape 10 has at its central portion a video region in which video data V₁₁, V₁₂, V₁₃, V₂₁, V₂₂, V₂₃, ..., for fields F₁, F₂, ..., are recorded, and has at its leading and trailing ends audio regions in which time-base-compressed audio data, A₁₁, A₁₂, A₁₃, A₂₁, A₂₂, A₂₃, ..., are recorded dually.

For variable-speed reproduction of a tape on which audio data such as the D1 or D2 format audio data are recorded in the track direction on a block-by-block basis, there has been employed a processing system in which variable speed reproduction is performed with track jumps using a dynamic tracking head; audio signal discontinuities produced by the track jumps are compensated by interpolation or by muting, or by means of a processing system in which the rotational speed of the drum and the tape running speed are proportionally changed and all the audio and video tracks are reproduced, with the audio signals being outputted directly and the video signals being subjected to thinning-out or supplementing operations.

However, the following problems arise when performing variable speed reproduction with the D1 or D2 format digital video tape recorder.

With the former type processing system employing the dynamic tracking head, noise may be produced at the junction points on interpolation. With the muting operation, voice dropout may be audibly perceived. On the other hand, with the latter system, which changes the drum speed and tape speed proportionally, the reproducing frequency is changed due to the change in the rotational speed of the drum, so that the hardware required is increased by the necessity of time base processing of the video signals, and the voice pitch is changed. Moreover, to produce a digital voice output, it is necessary to perform the operation of changing the sampling frequency.

It is an object of the present invention to improve the audio data quality and to simplify the processing when variable speed reproduction is performed on a D1 or D2 format digital video tape recorder.

It is another object of the present invention to provide an apparatus in which reproduced audio signals of high sound quality may be produced by simple hardware without the pitch being changed during variable speed reproduction.

According to the present invention, there is provided an apparatus for reproducing a digital audio and video data recorded on successive oblique parallel tracks on a video tape on which digital audio track portions are arranged at both ends of digital video track portions, each field of the video signal recorded corresponding to an integral number of tracks, the audio digital data recorded on the digital audio track portion at one end of a digital track portion being also recorded in the audio track portion at the other end portion of the video track portion of the next track so that a double recording of the audio data is accomplished, comprising:
transducing means for reproducing the digital audio and video data,
data processing means connected to said transducing means for processing the digital audio and video data and for extracting the digital audio data with an error flag data, and for providing a first and second audio data corresponding to the doubly recorded audio data, the apparatus being characterized in that it further comprises
means for controlling a position of said reproducing means in a direction transverse to the audio and video portions of the tracks so that said transducing means can skip the tracks corresponding to one field of audio and video data,
means for selecting one of said first and second audio data in response to the error flag signalling an error or control signal generated in conjunction with the skip of said transducing means,
means for controlling a gain acting on said first and second audio data in response to said occurrence of the control signal so that the amplitude level of said first and second audio data is gradually decreased and increased respectively, and
means for combining output signals of said gain controlling means so that a cross-fade function of the audio data is performed during a period of occurrence of the control signal.

The invention will be further described by way of non-limitative example with reference to the accompanying drawings, in which:-

Figure 1 is a diagrammatic view showing a typical construction of a rotary magnetic head device employed in a digital video tape recorder.

Figure 2 is a diagrammatic view showing the track format of a digital video tape recorder employing the rotary magnetic head device.

Figure 3 is a diagrammatic view showing a track format on the magnetic tape and the typical scanning state by the dynamic tracking head when the present invention is applied to a digital video tape recorder to effect double speed reproduction.

Figure 4 is a diagrammatic view showing the audio data reproduced after cross-fading.

Figure 5 is a block diagram showing the construction of a digital video tape recorder to which the present invention is applied.

Figures 6A, B and C are signal waveform diagrams for illustrating the operation of the digital video tape recorder shown in Figure 5.

In an embodiment which will be explained hereinafter, the present invention is applied to an audio signal reproducing system of a digital video tape recorder having the above mentioned track format which is shown in Figure 2.

In the present illustrative embodiment of the invention, a series of audio data or voice data A₁₁, A₁₂, A₁₃, A₂₁, A₂₂, A₂₃, ... are recorded in the audio region ahead of the central video region in which video data V₁₁, V₁₂, V₁₃, V₂₁, V₂₂, V₂₃, ... for fields F₁, F₂, ..., while the same series of the audio data A₁₁, A₁₂, A₁₃, A₂₁, A₂₂, A₂₃, ... are recorded in the audio region trailing the video region with a shift corresponding to one set of the recording tracks.

That is, the audio data A₁₁ is recorded in the audio region ahead of the video region of a first one T₁₁ of a set of inclined recording tracks T₁₁ in which the video data V₁₁ of one field are recorded, while the next audio data A₁₂ is recorded in the audio region at the trailing end of the video region. The audio data A₁₂ is also recorded in the audio region at each end of the video region of a second one of the set of inclined recording tracks T₁₂ in which the first field video data V₁₁ are recorded, while the next audio data A₁₃ is recorded in the audio region after the trailing end of this video region. The audio data A₁₃ is also recorded in the audio region ahead of the leading end of the video region of a third one of the set of the inclined recording tracks, T₁₃, in which the first field video data V₁₃ are recorded, while the audio data A₂₁, is recorded in the audio region at the trailing end of this video region. In the similar manner, the above series of audio data A₁₁, A₁₂, A₁₃, A₂₁, A₂₂, A₂₃, ... are dually recorded in the different recording track in the audio regions at the leading and trailing ends of the video regions.

Variable speed reproduction with track jumps on a field-by-field basis is performed for reproducing the video data V₁₁, V₁₂, V₁₃, V₂₁, V₂₂, V₂₃ ... of the fields F₁, F₂, ... and the audio data A₁₁, A₁₂, A₁₃, A₂₁, A₂₂, ..., by scanning the inclined recording tracks of the magnetic tape 20, using a dynamic tracking head which may be displaced across the track width due to the provision of an electronically controlled bimorph, for example. The audio data before and after the track jumps are connected together by cross-fading, for example, to produce a series of reproducing audio data.

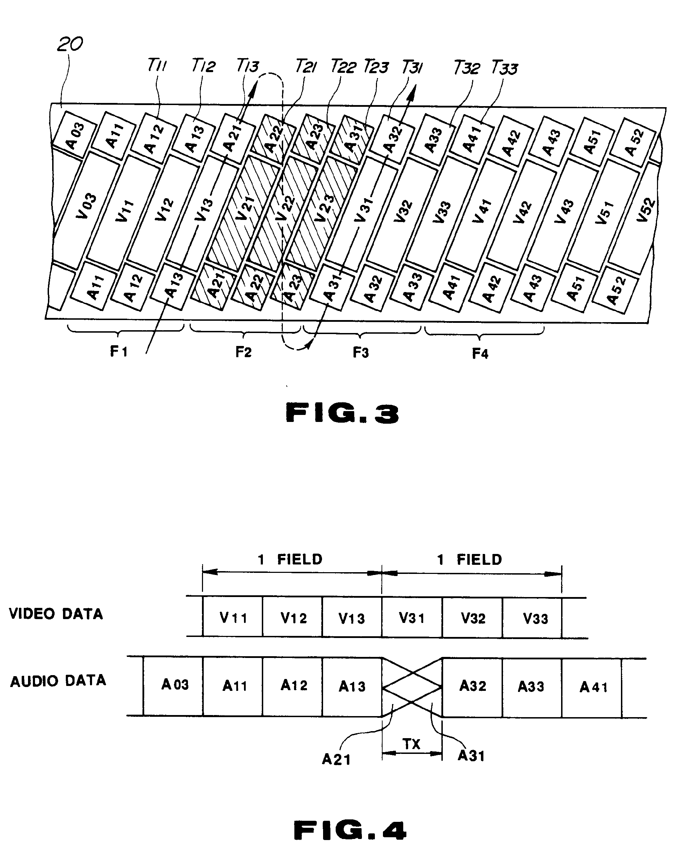

In Figure 3, the arrows and broken line show an example of the scanning state of the double-speed reproducing operation in which the inclined recording tracks T₂₁, T₂₂, T₂₃ of the second field F₂, shown by hatching in Figure 3, are skipped, i.e. jumped over at the time point when the scanning of the inclined recording tracks T₁₁, T₁₂, T₁₃ of the first field F₁ is terminated so as to proceed to the scanning of the inclined recording track T₃₁ of the third field F₃ from the scanning of the inclined recording track T₁₃ of the first field F₁.

Then, as shown in Figure 4, the reproducing audio data A₂₁, A₃₁ before and after to track jump are connected with the first one-third field period after the track jump as a cross-fading period Tₓ, to form a series of reproduced audio data.

With the reproduced audio data A₂₁, A₃₁, connected to each other by cross-fading, the reproduced audio data A₂₁ are consecutive to the previously reproduced audio data A₁₃, while the reproduced audio data A₃₁ are consecutive to the subsequently reproduced audio data A₃₂, so that the cross-fading may be performed satisfactorily. Moreover, discontinuities of the reproduced audio data which occur during the cross-fade period Tₓ and hence are not obtrusive when heard.

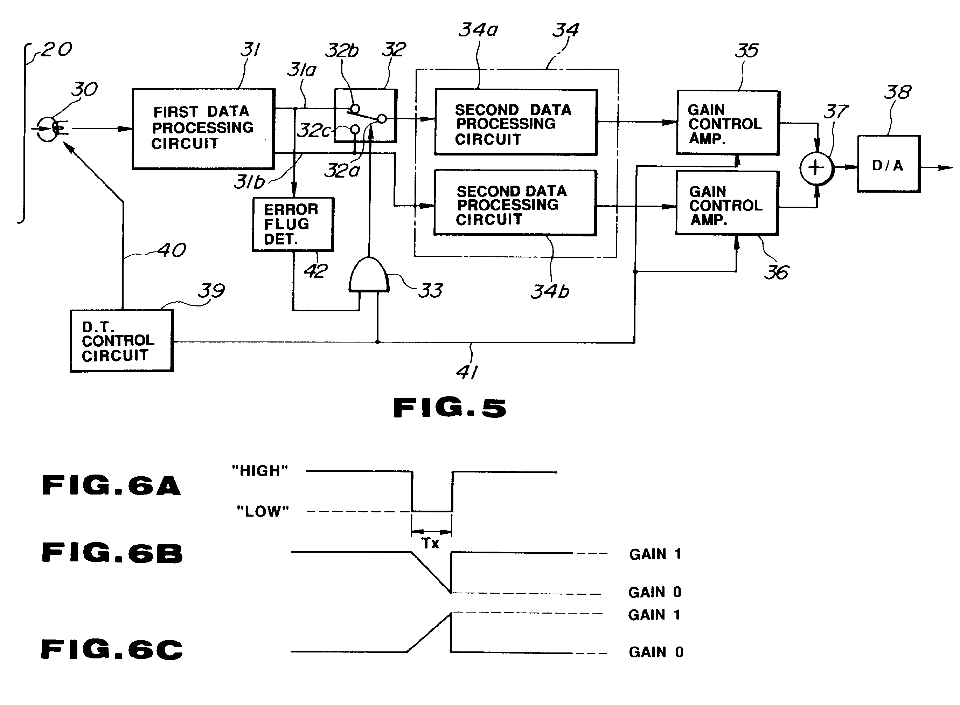

By connecting the reproduced audio data before and after track jumps by cross-fading, reproduced audio data of high sound quality may be obtained by simple hardware without the pitch being changed during variable speed reproduction. The sampling frequency of the reproduced audio data need not be changed during variable speed reproduction so that the audio data may be outputted as the digital output. De-phasing of audio data caused by the five field sequence may be compensated at the time of cross-fading. The phase at the junction of the reproduced audio data may be adaptively changed by the contents of the reproduced audio data to produce reproduced audio signals of higher sound quality. The construction and operation of an implementation of this point of the invention will be explained by referring to Figures 5 and 6.

Referring to Figure 5, a magnetic tape 20 has a signal recording format as shown in Figure 3. The magnetic tape is traced by a reproducing head 30 so that the video signals V₁₁, V₁₂, V₁₃, ... and audio signals A₁₁, A₁₂, A₁₃, ... are reproduced. The reproducing head 30 is controlled in its height by a dynamic tracking (DT) control circuit 39. The control of the above mentioned head jumps is performed by the dynamic tracking control circuit 39 via a wire 40 to the reproducing head 30. The video signal and the audio signal produced by the reproducing head 30 are sent to a first data processing circuit 31. This data processing circuit is formed by an equalizer, a phase locked loop, mirror square decoder and an inner code correction circuit. The mirror square coding and decoding are described in detail in United States reissue Patent 31,311. Although the data processing circuit 31 processes both video and audio signals, the present invention is concerned only with the processing of audio signals and hence the description is given herein only of the audio signals. The audio signals decoded by the processing circuit 31 and corrected as to the inner code are supplied along with data and error flags to a pair of select terminals 32b, 32c of a switching circuit 32 over wires 31a, 31b. Track outlet side audio signals shown in Figure 3 are outputted to the line 31a, while track inlet side audio signals shown in Figure 3 are outputted to the line 31b. As mentioned hereinabove, the trailing audio region of one track contains signals identical to those in the leading audio region of the next track, if there is no error, so that the aforementioned connection presents no problems. The switching circuit 32 has its stationary contact 32a controlled by the output of an AND gate 33. Thus the stationary contact 32a is connected to the select terminals 32b and 32c, for the output of the AND gate 33 being low and high, respectively. As mentioned hereinabove, audio data and an error flag is supplied on the line 31a, the error flag being high when there is an error in the audio data. This error flag is detected by an error flag detection circuit 42 and a "high" signal and a "low" signal are supplied to one input terminal of the AND gate 33. The other input terminal of the AND gate 33 is supplied from the dynamic tracking control circuit 39 with a signal which goes low only during a track jump and goes high otherwise, as shown at a in Figure 6. thus, at the time of a track jump, the output of the AND gate 33 goes low, so that the signal on the line 31a, that is, the signal from the track trailing end region, is selected by the switching circuit 32. Except during track jump, if an error is produced in the signal on the line 31a, that is, when the output of the error flag detection circuit 42 is at the high level, the output of the AND gate 33 also goes high, so that the signal on the line 31b, that is, the audio signal at the track leading region, is selected by the switching circuit 32.

The audio signal thus selected is transmitted to a second data processing circuit 34, which includes above all an outer code correction circuit and a deshuffle circuit. Although two second data processing circuits 34a, 34b are shown in Figure 5 as being present separately, the data processing operation is performed in effect as a time-divisional operation, so that only one processing circuit need actually be employed. These second data processing circuits 34a, 34b are supplied with an output signal of the switching circuit 32 and a signal over the line 31b, respectively. The audio signals processed by these signal processing circuits 34a, 34b are supplied to gain control amplifiers 35, 36, respectively. the gain of each of the gain control amplifiers are changed during the time the track jump control signal (A in Figure 6) is at a low level. Thus, as shown at B in Figure 6, the gain of the gain control amplifier 35 is changed gradually from "1" to "O" during the track jump period Tₓ. with the gain equal to 1, the input signal is outputted directly, whereas, with the gain equal to O, no input signal is outputted. Except during jumping, the gain control amplifier 35 has a gain equal to "1", as shown at B in Figure 6. Conversely, the gain of the gain control amplifier 36 is adapted to be changed gradually from "O" to "1" during track jump period Tₓ, as shown at C in Figure 6. The gain control amplifiers 35, 36 are controlled by the track jump control signal, shown at A in Figure 6, supplied from the dynamic tracking circuit 39 over line 41. Thus the level of the output signal from the gain control amplifier 35 is gradually reduced during the track jump period Tₓ as shown at A₂₁ in Figure 4, whereas the level of the output signal gain control amplifier 36 is increased as shown at A₃₁ in Figure 4. The output signals from these gain control amplifiers 35, 36 are summed together in a mixing circuit 37, so that the signal A₂₁ decaying gradually during the track jump period Tₓ and the signal A₃₁ increasing gradually during the same period are ultimately mixed with each other, that is, cross-faded, as shown at B in Figure 4, before being supplied to a digital-to-analog converter 38. It is noted that the arrangement of the present invention shown in Figure 5 is shown in a hardware block diagram only for assisting the understanding of the present invention, and that, in practice, it may be composed of a micro-computer and peripheral circuits, such as additional ROMs or RAMs. It is therefore apparent that a construction of Figure 5, uses a micro-computer, is also comprised within the scope of the present invention.

## Claims

1. Apparatus for reproducing a digital audio and video data recorded on successive oblique parallel tracks on a video tape (10) on which digital audio track portions are arranged at both ends of digital video track portions, each field of the video signal recorded corresponding to an integral number of tracks, the audio digital data recorded on the digital audio track portion at one end of a digital track portion being also recorded in the audio track portion at the other end portion of the video track portion of the next track so that a double recording of the audio data is accomplished, comprising:
transducing means (30) for reproducing the digital audio and video data,
data processing means (31,42) connected to said transducing means for processing the digital audio and video data and for extracting the digital audio data with an error flag data, and for providing a first and second audio data corresponding to the doubly recorded audio data, the apparatus being characterized in that it further comprises
means (39) for controlling a position of said reproducing means in a direction transverse to the audio and video portions of the tracks so that said transducing means can skip the tracks corresponding to one field of audio and video data,
means for selecting (32,33) one of said first and second audio data in response to the error flag signalling an error or control signal generated in conjunction with the skip of said transducing means,
means for controlling a gain (35,36) acting on said first and second audio data in response to said occurrence of the control signal so that the amplitude level of said first and second audio data is gradually decreased and increased respectively, and
means for combining (37) output signals of said gain controlling means so that a cross-fade function of the said first and second audio data is performed during a period of occurrence of the control signal.

2. The apparatus according to claim 1, wherein said data processing means, selecting means and gain control means are performed by using a digital signal processing circuit.

3. The apparatus according to claim 2, wherein said digital signal processing circuit includes a micro-computer.

4. The apparatus according to claim 3, in which an error flag detection circuit is further included for generating the error flag.

## Patentansprüche

1. Vorrichtung zur Wiedergabe von digitalen Audio- und Videodaten, die in aufeinanderfolgenden schrägliegenden parallelen Spuren auf einem Videoband (10) aufgezeichnet sind, auf dem Digital-Audio-Spurenabschnitte an beiden Enden von Digital-Video-Spurenabschnitten angeordnet sind, wobei jedes Teilbild des aufgezeichneten Videosignals einer ganzen Zahl von Spuren entspricht, und die in dem Digital-Audio-Spurenabschnitt an einem Ende eines Digital-Spurabschnittes aufgezeichneten digitalen Audiodaten auch in dem Audio-Spurabschnitt an dem anderen Endabschnitt des Video-Spurabschnittes der nächsten Spur aufgezeichnet sind, so daß die Audiodaten doppelt aufgezeichnet sind, mit:
einer Wandler-Vorrichtung (30) zum Wiedergeben der digitalen Audio- und Videodaten,
einer mit der Wandler-Vorrichtung verbundenen Datenverarbeitungs-Einrichtung (31,42) zum Verarbeiten der digitalen Audio- und Videodaten und zum Ausblenden der mit einem Fehlerkennzeichen versehenen digitalen Audiodaten, und zum Erzeugen erster und zweiter Audiodaten entsprechend den doppelt gespeicherten Audiodaten,
**gekennzeichnet** durch
eine Vorrichtung (33) zum Steuern der Position der Wiedergabe-Vorrichtung in einer Richtung quer zu den Audio- und Videoabschnitten der Spuren, so daß die Wandler-Vorrichtung die einem Teilbild von Audio- und Videodaten entsprechenden Spuren überspringen kann,
eine Vorrichtung (32,33) zum Auswählen der ersten oder der zweiten Audiodaten in Reaktion auf ein Fehlerkennzeichen, das ein Fehler- oder Steuersignal kennzeichnet, das in Zusammenhang mit dem Überspringen der Wandler-Vorrichtung erzeugt worden ist,
eine Vorrichtung (35,36) zum Steuern einer auf die ersten und zweiten Audiodaten in Reaktion auf das Auftreten des Steuersignales wirkenden Verstärkung, so daß die Amplitudenhöhe der ersten und zweiten Audiodaten allmählich gesenkt bzw. erhöht wird, und
eine Vorrichtung (37) zum Kombinieren von Ausgangssignalen der Verstärkungs-Steuervorrichtung, so daß während eines Zeitabschnittes, in dem das Steuersignal auftritt, eine Überblendung der ersten und zweiten Audiodaten ausgeführt wird.

2. Vorrichtung gemäß Anspruch 1, wobei die Datenverarbeitungs-Einrichtung, die Auswahl-Vorrichtung und die Verstärkungs-Steuerungsvorrichtung unter Verwendung einer Digitalsignalverarbeitungs-Schaltung betrieben werden.

3. Vorrichtung gemäß Anspruch 2, wobei die Digitalsignalverarbeitungs-Schaltung einen Mikrocomputer umfaßt.

4. Vorrichtung gemäß Anspruch 3, die weiterhin eine Fehlerkennzeichen-Erkennungsschaltung zum Erzeugen des Fehlerkennzeichens umfaßt.

## Revendications

1. Dispositif pour reproduire des données numériques audio et vidéo enregistrées sur des pistes parallèles obliques successives sur une bande magnétique (10) sur laquelle des portions de piste numérique audio sont disposées aux deux extrémités de portions de piste numérique vidéo, chaque trame du signal vidéo enregistré correspondant à un nombre entier de pistes, la donnée numérique audio enregistrée sur la portion de piste numérique audio à une extrémité d'une portion de piste numérique vidéo étant également enregistrée dans la portion de piste audio à l'autre portion d'extrémité de la portion de piste vidéo de la piste suivante de manière à effectuer un double enregistrement de la donnée audio, comprenant :
un moyen transducteur (30) pour reproduire les données numériques audio et vidéo ;
un moyen de traitement de données (31, 42) connecté audit moyen transducteur pour traiter les données numériques audio et vidéo et pour extraire la donnée numérique audio avec une donnée de marque d'erreur, pour fournir des première et seconde données audio correspondant à la donnée audio enregistrée en double, le dispositif étant caractérisé en ce qu'il comprend en outre :
un moyen de commande (33) pour commander la position dudit moyen de reproduction dans une direction transversale aux portions audio et vidéo des pistes, de sorte que ledit moyen transducteur peut sauter les pistes correspondant à une trame de données audio et vidéo ;
un moyen de sélection (32, 33) pour sélectionner l'une desdites première et seconde données audio en réponse à une erreur signalée par la marque d'erreur ou à un signal de commande produit en conjonction avec le saut dudit moyen transducteur ;
un moyen de commande de gain (35, 36), pour commander un gain, agissant sur lesdites première et seconde données audio en réponse à ladite apparition du signal de commande de sorte que le niveau d'amplitude desdites première et seconde données audio est, respectivement, graduellement diminué et augmenté ; et,
un moyen de combinaison (37) pour combiner les signaux de sortie dudit moyen de commande de gain, de sorte qu'une fonction de fondu enchaîné de la donnée audio est effectuée pendant une période d'apparition du signal de commande.

2. Dispositif selon la revendication 1, dans lequel ledit moyen de traitement de données, ledit moyen de sélection et ledit moyen de commande de gain sont réalisés à l'aide d'un circuit de traitement de signaux numériques.

3. Dispositif selon la revendication 2, dans lequel ledit circuit de traitement de signaux numériques comprend un microcalculateur.

4. Dispositif selon la revendication 3, dans lequel un circuit de détection de marque d'erreur est, en outre, prévu pour produire la marque d'erreur.
